Europäisches Patentamt

European Patent Office

Office européen des brevets

(11) Publication number: **0 500 190 A1**

## EUROPEAN PATENT APPLICATION

(21) Application number: **92200526.9**

(22) Date of filing: **24.02.92**

(51) Int. Cl.⁵: **C08K 7/08**, C08L 77/00

(30) Priority: **22.02.91 JP 48687/91**

(43) Date of publication of application:
**26.08.92 Bulletin 92/35**

(84) Designated Contracting States:
**AT BE CH DE DK ES FR GB GR IT LI NL PT SE**

(71) Applicant: **DSM N.V.**
**Het Overloon 1**
**NL-6411 TE Heerlen(NL)**

(72) Inventor: **Hironaka, Katsuhiko, c/o TEIJIN LTD.,**
**Sagamihara Research Center, 37-19, Oyama**
**3-chome,**
**Sagamihara-shi, Kanagawa-ken(JP)**
Inventor: **Nishijima, Kiyoaki, c/o TEIJIN LTD.,**
**Sagamihara Research Center, 37-19, Oyama**
**3-chome,**
**Sagamihara-shi, Kanagawa-ken(JP)**

(54) **Polyamide resin composition.**

(57) The purpose of the invention is to provide a polyamide resin composition having excellent heat-resistance, surface appearance and water-absorption characteristics and a high flexural modulus.

The invention constitutes of a polyamide resin composition containing (A) 100 parts by weight of a polyamide resin composed of tetramethylene diamine as a main diamine component and adipic acid as a main dicarboxylic acid component and (B) 101 to 300 parts by weight of potassium titanate whisker. In the process of the production of the composition the bulk weight of the potassium titanate whisker is preferably at least 0.3 $g/cm^3$.

EP 0 500 190 A1

The present invention is related to a resin composition. More particularly, it is related to a polyamide 46 resin composition exhibiting excellent heat-resistance, high flexural modulus and water-absorption characterisatics and giving a molded article having excellent surface appearance.

Nylon 46 resin derived from tetrametylenediamine or a functional derivative thereof and adipic acid or a functional derivative thereof is already known.

Since nylon 46 resin has excellent heat-resistance, mechanical properties such as tensile strength, flexural strength, etc., and sliding characteristics, it is a very useful engineering plastic. Especially, the resin is attracting special attention in the fields of automobile parts and mechanical parts, etc., due to its excellent heat-resistance, as a material substituting metallic materials to achieve reduction of weight, noise and power consumption, etc.

The materials that are to be used as a substitute for metallic material need to have good mechanical properties, especially extremely high flexural modulus. Nylon 46 resin has some weak points such as a low flexural modulus compared with metallic materials and insufficient dimensional stability caused by the dimensional change with absorbed water. Accordingly, there is a considerable restriction on the design of parts made of plain nylon 46 resin.

Compounding of a reinforcing material such as glass fiber and carbon fiber is a common means to improve the modulus of nylon 46 resin. However, an extremely large amount of glass fiber is necessary in the nylon 46 resin in order to attain a sufficiently high modulus to enable the substitution of metals, and in the above case, new problems develop such as poor procesability in the production of pellets of the composition and very poor surface appearance of molded articles. On the other hand, with smaller amounts of carbon fiber a compositon having a high flexural modulus is obtained, however, carbon fiber is an expensive material and is therefore not preferred for practical purpose. Improvement of the high water-absorption of nylon 46 resin is also extremely important and the decreased amount of carbon fiber compared with glass fiber results in an increase of nylon 46 resin content and, accordingly, decrease of the effect the water-absorption improvement. Attempts to obtain a composition with a large a amount of carbon fiber resulted in problems of poor procesability and deteriorated surface appearance of the molded article similar to glass fiber due to the bulkiness of the carbon fiber.

Compounding of potassium titanate whisker is already known as a means for improving the flexural modulus of a material while preserving a good surface appearance and attempts to compound the whisker to nylon 46 resin were disclosed amongst others in the specifications of JP-A 62-185746, 63-207851, 1-121360 and 1-247458.

However, the procesability of potassium titanate whisker is poor because of the high bulkiness of the whisker, and it is extremely difficult to compound the whisker into a nylon 46 resin at high ratio. The amount of potassium titanate whisker claimed to be compounded succesfully in nylon 46 resin was at most 100 parts by weight per 100 parts by weight of nylon 46 resin in the examples described in the above specifications. There are no examples known in which potassium titanate whisker in an amount exceeding the above limit was incorporated by simply compounding. In other words, no composition with potassium titanate whiskers has been developed meeting the requirements of a material having higher flexural modulus.

It has been difficult to get a composition having high modulus and low water-absorption by compounding a large amount of reinforcing material while preserving the surface appearance of the molded article, and this difficulty is a substantial obstacle to the utilization of nylon 46 resin as automobile parts, etc., in spite of the heat-resistance of nylon 46 resin being sufficiently high to enable the use as a substitute for metallic materials.

The object of the present invention is to provide a polyamide resin composition having high flexural modulus, excellent surface appearance of the molded article and water-absorption characteristics while keeping the excellent heat-resistance of nylon 46 resin.

Other objects and merits of the present invention will be cleared by the following explanation.

The objects of the present invention can be achieved by a polyamide resin composition containing (A) 100 parts by weight of a polyamide resin composed of tetramethylene diamine as main diamine component and adipic acid as main dicarboxylic acid component and (B) 101 to 300 parts by weight of potassium titanate whisker.

The polyamide resin (A) used in the present invention is a resin containing tetrametylenediamine as a main diamine component and adipic acid as a main dicarboxylic acid component.

Such polyamide resin can be prepared by the thermal condensation reaction of a starting raw material composed mainly of tetramethylenediamine or a functional derivative thereof and adipic acid or a funcional dervative therof.

The polyamide resin (A) may contain a small amount (for example, less than 20 mol% of the diamine component) of a diamine other than the above diamine and a small amount (for example, less than 20 mol% of the dicarboxylic acid component) of a dicarboxylic acid other than the above dicarboxylic acid. However in the case of isomorphous groups, for instance terephtalic acid, a higher content is admissable. The polyamide 46 is commercially available.

The intrinsic viscosity number of the polyamide resin used in the present invention is preferably 0.90 to 1.90 ml/g, especially 1.00 to 1.50 ml/g measured in m-cresol at 35°C. It is not desirable to use a polyamide resin having an intrinsic viscosity of exceeding 1.90 ml/g, because the fluidity of the composition in molten state becomes poor, the luster of the molded article is lost and the reproducability of the mechanical and thermal properties of the articles becomes difficult. On the other hand, a polyamide resin having an intrinsic viscosity lower than 0.90 ml/g has the disadvantage of getting a composition having poor mechanical strength.

However it may prove advantageous to start with a polyamide having a lower intrinsic viscosity and after compounding to give the composition a heat treatment in which aftercondensation of the polyamide occurs.

The potassium titanate whisker (B) used in the present invention is preferably a single crystal fiber of the following general formula

$K_2O.n(TiO_2)$
(n is a number of from 2 to 8)
or $K_2O.m(TiO_2).0.5H_2O$
(m is a number of from 2 to 8)

Representative examples of potassium titanates are potassium tetratitanate, potassium hexatitanate and potassium octatitanate. Among which, potassium hexatitanate is most preferable from the viewpoint of low dissolution of free potassium.

The average fiber length of the potassium titanate whisker is preferably from 1 to 150 $\mu$m and the average fiber diameter is preferably from 0.15 to 1 $\mu$m.

Potassium titanate whisker can be produced, for example, by a calcination process, a hydrothermal synthesis or a flux process. It is also effective to treat the surface of potassium titanate whisker with a silane coupling agent or titanate coupling agent to improve the mechanical properties of the composition of the present invention produced by compounding the whisker to a polyamide resin.

The amount of the potassium titanate whisker (B) used in the present invention is from 101 to 300 parts by weight based on 100 parts by weight of polyamide resin. When the amount is less than 101 parts by weight, the objective of high modulus to enable the substitution for metallic material cannot be obtained. When the amount exceeds 300 parts by weight, the procesability such as extrudability of the composition is lowered to an undesirable level.

Potassium titanate whisker usually has a high bulkiness corresponding to a bulk specific gravity of as low as 0.1 to 0.2. Such whisker is not suitable for the production of a resin compostition of the present invention having high whisker content.

It has been found that a resin compounded with potassium titanate whisker granulated in granular form can be extruded in stable state without causing the above problems.

Granular potassium titanate whisker can be produced by conventional granulation processes. There is no particular restriction on the granulation process, however, the bulk specific gravity of the granule is preferably from 0.3 to 1.0. The effect to improve the extrudability is low at a bulk specific gravity of 0.3 or less and the dispersability of the whisker in the composition becomes poor at a bulk specific gravity of 1.0 or above.

The resin composition of the present invention may be incorporated, according to the need, with effective amounts of a pigment or other additives. Examples of the additives are fillers, e.g. powdery, granular of flaky inorganic fillers such as kaolin, clay, wollastonite, talc, mica, calcium carbonate, barium sulfate, glass beads, glass flakes, etc.

The composition may be further incorporated with a flame-retardant for example a halogen-containing compound such as brominated polystyrene, brominated polyphenylene ether, brominated epoxy compound, brominated bisphenol A diglycidyl ether and its oligomer, a polycarbonate oligomer prepared from brominated bisphenol A, brominated biphenyl ether, brominated diphthalimide compound, dimer of chlorinated hexapentadiene, etc.; a phosphorus compound such as red phosphorus, triphenyl phosphate, etc,; a phosphorus-nitrogen compound such as phosphonic acid amide; a triazine compound such as melamine, melam, melem, cyanuric acid, melamine cyanurate, etc.; metal hydroxide such as aluminum hydroxide, magnesium hydroxide, dawsonite, gypsum dihydrate, etc,; a flame-retarding assistant to be used singly or in combination with the above halogen-containing compound, for example an antimony compound such as antimony trioxide, a metal oxide such as boron oxide, iron oxide, etc.

Furthermore, an antioxidant or a heat-stabilizer such as a copper compound, for example copper iodide, a hindered phenolic compound, an aromatic amine compound, an organic phosphorus compound, a sulfur compound, etc. may be added for the improvement of heat resistance. For the purpose of improving the stability of the melt viscosity and the resistance to hydrolysis, etc., various epoxy compounds or oxazoline compounds and the like may be added to the composition. The epoxy compound is preferably a bisphenol A epoxy compound prepared by the reaction of bisphenol A with epichlorohydrin, an aliphatic glycidyl ether prepared by the reaction of various glycols or glycerol with epichlorohydrin, a novolak epoxy compound, an aromatic or aliphatic carboxylic acid-type epoxy compound, etc., and the oxazoline compound is preferably aromatic or aliphatic bisoxazoline, especially 2,2'-bis(2-oxazoline) or 2,2'-m-phenylenebis-(2-oxazoline).

In addition to the above, the composition may incorporate stabilizers, colorants, lubricants, ultraviolet absorbers and antistatic agents.

Further small amounts of other thermoplastic resin may be added such as other polyamide resins, polyester resins, polyphenylene sulfide resins, polyphenylene ether resins, polycarbonate resins, phenoxy resins, plyetheylene, its copolymer, polypropylene, its copolymer, polystyrene, its copolymer, acrylic resin, acrylic copolymer, polyamide elastomer and polyester elastomer or a thermosetting resin such as phenolic resin, melamine resin, unsaturaed polyester resin and silicone resin.

The resin composition of the present invention can be prepared by any arbitrary compounding technique for the compounding of thermoplastic resins.

Ususally, it is preferable to disperse the components of the composition as uniformly as possible, and this can be achieved, for example, by mixing and homogenizing the components with each other with a heated extruder, extruding in the form of strands and cutting to a desired length to obtain a pelletized composition.

The molding composition prepared by the above process is usually kept in a sufficiently dried state, charged into the hopper of a molding machine and molded. As an alternative method, the constituent raw materials of the composition are dry blended, charged directly into the hopper of amolding machine, and melted and kneaded in the molding machine.

Examples

The present invention is described to a greater detail in the following examples. The properties cited in the examples were measured by the following methods.

(1) Mechanical strength:
Flexural test --- in accordance with ASTM D790
(2) Heat distortion temperature under load (HDT):
in accordance with ASTM D648 (load: 18.6 kg/cm$^2$)

(3) Water absorption characteristics:
Specimens were left in an atmosphere of 80°C and 95 % relative humidity for 100 hours and the water-absorption was calculated from the weight increase. (Thickness of the specimen: 1.5 mm)
(4) Surface appearance of molded article:
Evaluated by visual inspection
(5) Intrinsic viscosity number:
The intrinsic viscosity of nylon 46 resin was measured by an Ostwald viscometer at 35°C using m-cresol as a solvent.

Examples 1 and 2 comparative example 1 and 2

A nylon 46 resin ("STANYL", product of N.V. DSM, Netherlands) having an intrinsic viscosity of 1.40 ml/g and dried at 110°C under a vacuum of 10 Torr for 12 hours was used together with aminosilane-treated granular potassium titanate whisker having a bulk specific gravity of 0.4 ("Tibrex", product of Kawatetsu Mining Co., Ltd,) or a potassium-titanate whisker having a bulk density of about 0.12-0.16 (Tismo D101, product of Ohtsuka Chemical) or glass fiber having an average fiber diameter of 10.5 μm (product of Nippon Electric Glass Co., Ltd.) for comparison at ratios shown in the Table 1, the components were kneaded under melting with a vented twin-screw extruder having a screw diameter of 44 mm Ø each at a cylinder temperature of 330°C, a screw revolution speed of 160 rpm and an extrusion rate of 40 kg/h while evacuating the extruder, and the thread extruded through a die was cooled and cut to obtain molding pellets.

Test pieces for the measurement of various properties were molded from the pellets using an injection molding machine having a shot capacity of 5 oz. at a cylinder temperature of 300°C, mold temperature of 120°C, injection pressure of 800 kg/cm$^2$, cooling time of 15 seconds and total cycle time of 40 seconds.

Various properties were measured by using the above molded test pieces. The test pieces were conditioned, according to JIS K7100, in an atmosphere of 23°C and 50 % relative humidity for 88 hours before measurement.

The results are shown in the Table-1.

Nylon 46 resin compounded with granular potassium titanate whisker exhibited good extrudability and the composition had an extremely high flexural modulus (Examples 1 and 2). On the contrary, the similar composition compounded with glass fiber exhibited a low extrusion stability and the obtained molded article had an extremely poor surface appearance (Comparative example 2).

The composition compounded with a large amount of potassium titanate whisker had excellent water-absorption characteristics and this property was remarkably improved from that of nylon 46 resin (Examples 1 and 2 and Comparative example 1).

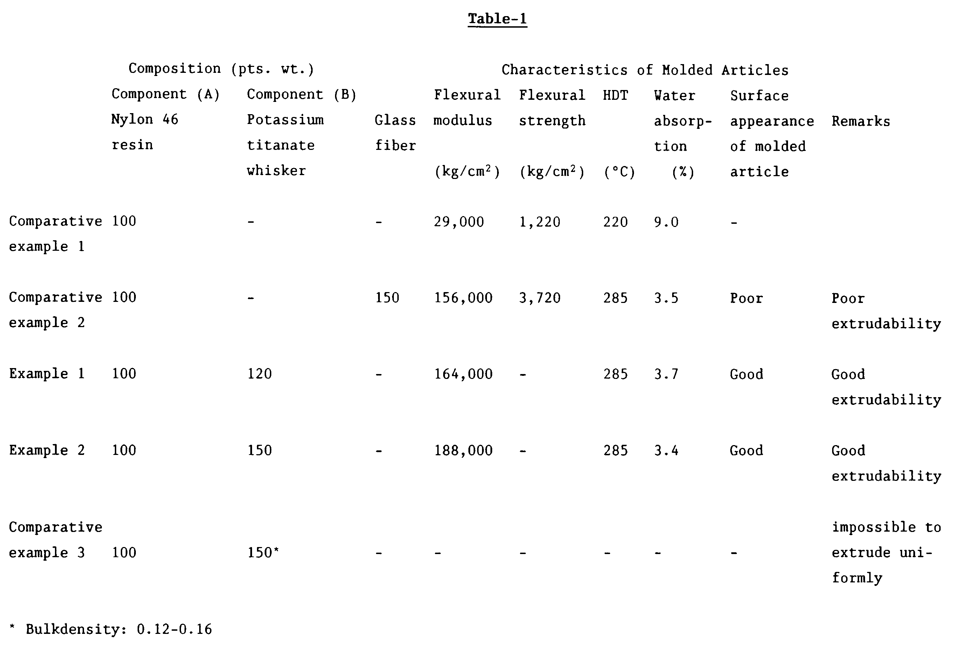

**Claims**

1. A polyamide resin composition containing (A) 100 parts by weight of a polyamide resin composed of tetramethylene diamine as main diamine component and adipic acid as main dicarboxylic acid component and (B) 101 to 300 parts by weight of potassium titanate whisker.

2. A polyamide resin composition described in claim 1 wherein said potassium titanate whisker to be compounded has a granular form having a specific gravity of from 0.3 to 1.0.

Table-1

| | Composition (pts. wt.) | | | Characteristics of Molded Articles | | | | | |
|---|---|---|---|---|---|---|---|---|---|
| | Component (A) Nylon 46 resin | Component (B) Potassium titanate whisker | Glass fiber | Flexural modulus (kg/cm$^2$) | Flexural strength (kg/cm$^2$) | HDT (°C) | Water absorption (%) | Surface appearance of molded article | Remarks |
| Comparative example 1 | 100 | - | - | 29,000 | 1,220 | 220 | 9.0 | - | |
| Comparative example 2 | 100 | - | 150 | 156,000 | 3,720 | 285 | 3.5 | Poor | Poor extrudability |
| Example 1 | 100 | 120 | - | 164,000 | - | 285 | 3.7 | Good | Good extrudability |
| Example 2 | 100 | 150 | - | 188,000 | - | 285 | 3.4 | Good | Good extrudability |
| Comparative example 3 | 100 | 150* | - | - | - | - | - | - | impossible to extrude uniformly |

* Bulkdensity: 0.12-0.16

EP 0 500 190 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN vol. 12, no. 237 (C-244)6 July 1988 & JP-A-63 027 558 ( TEIJIN LTD ) 5 February 1988 * abstract * | 1 | C08K7/08 C08L77/00 |
| A,D | WORLD PATENTS INDEX LATEST Derwent Publications Ltd., London, GB; AN 89-182857 & JP-A-1 121 360 (UNITIKA KK) 15 May 1989 * abstract * | 1 | |
| A,D | WORLD PATENTS INDEX LATEST Derwent Publications Ltd., London, GB; AN 88-282709 & JP-A-63 207 851 (JAPAN SYNTHETIC RUBBER) 29 August 1988 * abstract * | 1 | |
| A | WORLD PATENTS INDEX LATEST Derwent Publications Ltd., London, GB; AN 87-304380 & JP-A-62 215 656 (DAICEL HULS KK) 22 September 1987 * abstract * | 1 | TECHNICAL FIELDS SEARCHED (Int. Cl.5) C08K C08L |

-----

The present search report has been drawn up for all claims

| Place of search | Date of completion of the search | Examiner |
|---|---|---|
| THE HAGUE | 13 MAY 1992 | SIEMENS T. |